# EUROPÄISCHE PATENTANMELDUNG

(11) **EP 4 645 823 A1**
(43) Veröffentlichungstag der Anmeldung: **05.11.2025**
(21) Anmeldenummer: 25173064.4
(22) Anmeldetag: 29.04.2025
(51) Int. Cl.: H04L 61/5038, H04L 12/40, H04L 67/12, H04L 101/627

(54) **VERFAHREN ZUR ZUWEISUNG EINER KOMMUNIKATIONSADRESSE**

(30) Priorität: 30.04.2024 LU 507080
(71) Anmelder: Phoenix Contact GmbH & Co KG, 32825 Blomberg (DE)
(72) Erfinder: Wasmuth, Ulrich, 33098 Paderborn (DE)

(57) **Zusammenfassung**

Verfahren (100) zum Zuweisen einer Kommunikationsadresse zu einem Slave-Elektronikgerät (203), welches in einem seriellen Kommunikationsbus (207a-c) seriell einem Master-Elektronikgerät (201) nachgeschaltet ist, wobei die Kommunikationsadresse in Abhängigkeit von einer Position des Slave-Elektronikgeräts (203) in dem seriellen Kommunikationsbus (207a-c) zugewiesen wird, wobei das Slave-Elektronikgerät (203) in einen Adressierungsmodus schaltbar ist, wobei das Verfahren (100) umfasst: Anlegen (101) eines Adress-Steuersignals an den seriellen Kommunikationsbus (207a-c) durch das Master-Elektronikgerät (201); Schalten (103) des Slave-Elektronikgeräts (203) in den Adressierungsmodus ansprechend auf die Detektion des Adress-Steuersignals an dem seriellen Kommunikationsbus (207a-c); Anlegen (105) eines Adressierungssignals an den seriellen Kommunikationsbus (207a-c) durch das Master-Elektronikgerät (201) ein, wobei das Adressierungssignal die Kommunikationsadresse umfasst; und Speichern (107) der empfangenen Kommunikationsadresse als die Kommunikationsadresse des Slave-Elektronikgeräts (203) in dem seriellen Kommunikationsbus (207a-c) durch das Slave-Elektronikgerät (203) ansprechend auf den Empfang des Adressierungssignals über den seriellen Kommunikationsbus (207a-c).

## Beschreibung

Die vorliegende Erfindung betrifft ein Verfahren zum Zuweisen einer Kommunikationsadresse zu einem Slave-Elektronikgerät und ein selbstadressierbares Kommunikationssystem.

Um große Ausgangsleistungen bereitzustellen, wie beispielsweise in einer Ladesäule für Elektrofahrzeuge, kommunizieren Leistungselektronikmodule häufig untereinander, beispielsweise über einen Kommunikationsbus. Hierzu kann es notwendig sein, dass jedes Leistungselektronikmodul eine eigene Kommunikationsadresse aufweist.

Es ist daher eine Aufgabe der vorliegenden Erfindung, ein effizientes Verfahren und ein effizientes Kommunikationssystem zur Zuweisung einer Kommunikationsadresse bereitzustellen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt wird die erfindungsgemäße Aufgabe gelöst durch ein Verfahren zum Zuweisen einer Kommunikationsadresse zu einem Slave-Elektronikgerät, welches in einem seriellen Kommunikationsbus seriell einem Master-Elektronikgerät nachgeschaltet ist, wobei die Kommunikationsadresse in Abhängigkeit von einer Position des Slave-Elektronikgeräts in dem seriellen Kommunikationsbus zugewiesen wird, wobei das Slave-Elektronikgerät in einen Adressierungsmodus schaltbar ist, wobei das Verfahren umfasst: Anlegen eines Adress-Steuersignals an den seriellen Kommunikationsbus durch das Master-Elektronikgerät; Schalten des Slave-Elektronikgeräts in den Adressierungsmodus ansprechend auf die Detektion des Adress-Steuersignals an dem seriellen Kommunikationsbus; Anlegen eines Adressierungssignals an den seriellen Kommunikationsbus durch das Master-Elektronikgerät ein, wobei das Adressierungssignal die Kommunikationsadresse umfasst; und Speichern der empfangenen Kommunikationsadresse als die Kommunikationsadresse des Slave-Elektronikgeräts in dem seriellen Kommunikationsbus durch das Slave-Elektronikgerät ansprechend auf den Empfang des Adressierungssignals über den seriellen Kommunikationsbus.

Dadurch wird der technische Vorteil erreicht, dass das Master-Elektronikgerät automatisch eine effiziente und eindeutige Adresszuweisung für das Slave-Elektronikgerät und insbesondere eine Vielzahl weiterer Slave-Elektronikgeräte durchführen kann.

Das Master-Elektronikgerät und das Slave-Elektronikgerät sowie insbesondere zumindest ein weiteres Slave-Elektronikgerät können über den seriellen Kommunikationsbus in einer Daisy Chain verbunden sein. Der serielle Kommunikationsbus kann über ein mehradriges Kabel realisiert sein. Das mehradrige Kabel kann eine Stromversorgung des Master-Elektronikgeräts und des Slave-Elektronikgeräts sowie insbesondere des zumindest einen weiteren Slave-Elektronikgeräts umfassen. Über die Stromversorgung können beispielsweise auch Notaussignale (auch als "Emergency Stop" bezeichnet) an das Master-Elektronikgerät, das Slave-Elektronikgerät und insbesondere das weitere Slave-Elektronikgerät zur Deaktivierung einer Leistung des entsprechenden Geräts übermittelt werden.

Gemäß einer Ausführungsform bewirkt das Master-Elektronikgerät nach dem Anlegen des Adressierungssignals an den seriellen Kommunikationsbus ein erneutes Anlegen des Adress-Steuersignals an den seriellen Kommunikationsbus.

Dadurch wird der technische Vorteil erreicht, dass effizient eine sequenzielle Adressierung für eine Vielzahl von Slave-Elektronikgeräten durchgeführt werden kann.

Gemäß einer Ausführungsform bewirkt das Master-Elektronikgerät das erneute Anlegen des Adress-Steuersignals an den seriellen Kommunikationsbus ansprechend auf den Empfang eines Adressbestätigungssignals, das eine erfolgreiche Speicherung der Kommunikationsadresse durch das Slave-Elektronikgerät anzeigt.

Dadurch wird der technische Vorteil erreicht, dass die sequenzielle Adressierung für ein nächstes zu adressierendes Slave-Elektronikgeräts erst nach erfolgreicher Adressierung des vorangegangenen Slave-Elektronikgeräts durchgeführt werden kann, was eine konfliktlose Adresszuweisung ermöglicht.

Gemäß einer Ausführungsform legt das Slave-Elektronikgerät das Adressbestätigungssignal nach der Speicherung der Kommunikationsadresse an den seriellen Kommunikationsbus an.

Dadurch wird der technische Vorteil erreicht, dass das Master-Elektronikgerät verzögerungsfrei mit der Adressierung des nächsten Slave-Elektronikgeräts fortfahren kann.

Gemäß einer Ausführungsform sendet das Master-Elektronikgerät ein Anweisungssignal über den seriellen Kommunikationsbus an das Slave-Elektronikgerät aus, und wobei das Slave-Elektronikgerät ansprechend auf den Empfang des Anweisungssignals das Adress-Steuersignal an den seriellen Kommunikationsbus anlegt.

Dadurch wird der technische Vorteil erreicht, dass das Adress-Steuersignal für ein nachfolgend zu adressierendes Slave-Elektronikgeräts an dem vorhergehenden Slave-Elektronikgerät erzeugt werden kann.

Gemäß einer Ausführungsform legt das Slave-Elektronikgerät ansprechend auf den Empfang des Anweisungssignals ein vorbestimmtes Spannungspotential an, insbesondere mittels eines Schalters, wobei das vorbestimmte Spannungspotential das Adress-Steuersignal repräsentiert.

Dadurch wird der technische Vorteil erreicht, dass das Adress-Steuersignal mittels des vorbestimmten Spannungspotentials durch ein dem Slave-Elektronikgerät nachgeschaltetes weiteres Slave-Elektronikgerät effizient detektiert werden kann.

Gemäß einer Ausführungsform weist das Slave-Elektronikgerät einen ersten Kommunikationsanschluss und einen zweiten Kommunikationsanschluss auf, wobei der erste Kommunikationsanschluss mit einem Kommunikationsanschluss des Master-Elektronikgerätes verbunden ist, wobei das Anweisungssignal über den ersten Kommunikationsanschluss empfangen wird, und wobei das Slave-Elektronikgerät das Adress-Steuersignal an den seriellen Kommunikationsbus über den zweiten Kommunikationsanschluss, insbesondere mittels eines mit einem vorbestimmten Spannungspotential, das das Adress-Steuersignal repräsentiert, verbindbaren Schalters anlegt.

Dadurch wird der technische Vorteil erreicht, dass das Adress-Steuersignal durch Schließen des Schalters effizient signalisiert werden kann.

Gemäß einer Ausführungsform umfasst das Verfahren ein Bestimmen, welcher Kommunikationsanschluss von zumindest zwei Kommunikationsanschlüssen des Slave-Elektronikgeräts mit dem Master-Elektronikgerät verbunden ist, und ein automatisches Festlegen des ersten Kommunikationsanschlusses des Slave-Elektronikgeräts als denjenigen Kommunikationsanschluss, der mit dem Master-Elektronikgerät verbunden ist.

Dadurch wird der Vorteil erreicht, dass ein Benutzer beim Verbinden des Master-Elektronikgeräts über den Kommunikationsbus mit dem Slave-Elektronikgerät nicht irrtümlich eine Fehlverbindung erzielen kann.

Gemäß einer Ausführungsform umfasst das Verfahren ein Bestimmen, welcher Kommunikationsanschluss von zumindest zwei Kommunikationsanschlüssen des Slave-Elektronikgeräts mit einem weiteren Slave-Elektronikgerät verbunden ist, und ein automatisches Festlegen des zweiten Kommunikationsanschlusses des Slave-Elektronikgeräts als denjenigen Kommunikationsanschluss, der mit dem weiteren Slave-Elektronikgerät verbunden ist.

Dadurch wird der Vorteil erreicht, dass ein Benutzer beim Verbinden des Slave-Elektronikgeräts über den Kommunikationsbus mit dem weiteren Slave-Elektronikgerät nicht irrtümlich eine Fehlverbindung erzielen kann.

Gemäß einer Ausführungsform wird ein weiteres Slave-Elektronikgerät bereitgestellt, das dem Slave-Elektronikgerät in dem seriellen Kommunikationsbus nachgeschaltet ist, wobei das weitere Slave-Elektronikgerät ansprechend auf die Detektion des Adress-Steuersignals in einen Adressierungsmodus schaltet.

Dadurch wird der technische Vorteil erreicht, dass das weitere Slave-Elektronikgerät effizient adressiert werden kann.

Das weitere Slave-Elektronikgerät kann ein Leistungselektronikmodul sein.

Gemäß einer Ausführungsform legt das Master-Elektronikgerät ein weiteres Adressierungssignal mit einer weiteren Kommunikationsadresse an den seriellen Kommunikationsbus an, wobei das weitere Slave-Elektronikgerät ansprechend auf den Empfang des weiteren Adressierungssignals über den seriellen Kommunikationsbus die weitere Kommunikationsadresse als die Kommunikationsadresse des weiteren Slave-Elektronikgeräts in dem seriellen Kommunikationsbus speichert.

Dadurch wird der technische Vorteil erreicht, dass das weitere Slave-Elektronikgerät effizient adressiert werden kann.

Gemäß einer Ausführungsform legt das weitere Slave-Elektronikgerät nach der Speicherung der weiteren Kommunikationsadresse ein Adressbestätigungssignal an den seriellen Kommunikationsbus an, um die erfolgreiche Vergabe der Kommunikationsadresse an das Master-Elektronikgerät anzuzeigen.

Dadurch wird der technische Vorteil erreicht, dass das Master-Elektronikgerät verzögerungsfrei mit der Adressierung des nächsten Slave-Elektronikgeräts fortfahren kann.

Gemäß einer Ausführungsform weist das Master-Elektronikgerät einen Kommunikationsanschluss auf, welcher mit dem seriellen Kommunikationsbus verbunden ist, wobei der Kommunikationsanschluss einen Schalter aufweist, und wobei das Master-Elektronikgerät zum Anlegen des Adress-Steuersignals den Schalter mit einem vorbestimmten Spannungspotential, insbesondere Massepotential, verbindet, um das vorbestimmte Spannungspotential an den seriellen Kommunikationsbus anzulegen.

Dadurch wird der technische Vorteil erreicht, dass das Adress-Steuersignal mittels des vorbestimmten Spannungspotentials durch das dem Master-Elektronikgerät nachgeschalteten Slave-Elektronikgerät effizient detektiert werden kann.

Gemäß einer Ausführungsform trennt das Master-Elektronikgerät nach dem Anlegen des Adress-Steuersignals an den seriellen Kommunikationsbus den Schalter von dem vorbestimmten Spannungspotential, um eine Beaufschlagung des seriellen Kommunikationsbusses mit dem vorbestimmten Spannungspotential zu unterbinden.

Dadurch wird der technische Vorteil erreicht, dass das vorbestimmte Spannungspotential effizient über den Kommunikationsbus signalisiert wird.

Gemäß einer Ausführungsform sind das Master-Elektronikgerät und das Slave-Elektronikgerät Leistungselektronikmodule.

Zusätzlich kann auch das weitere Slave-Elektronikgerät ein Leistungselektronikmodul sein. Die Leistungselektronikmodule können beispielsweise ein Teil eines Ladesystems, insbesondere einer Ladesäule, für Elektrofahrzeuge sein.

Gemäß einer Ausführungsform ist der serielle Kommunikationsbus ein CAN-Kommunikationsbus oder ein I2C-Kommunikationsbus.

Unter einem CAN-Kommunikationsbus wird ein Controller-Area-Network-Kommunikationsbus verstanden.

Gemäß einem zweiten Aspekt wird die erfindungsgemäße Aufgabe gelöst durch ein selbstadressierbares Kommunikationssystem mit einem Master-Elektronikgerät und einem Slave-Elektronikgerät, welches dem Master-Elektronikgerät bei einer Kommunikation über einen seriellen Kommunikationsbus seriell nachgeschaltet ist, wobei das selbstadressierbare Kommunikationssystem ausgebildet ist, dem Slave-Elektronikgerät eine Kommunikationsadresse in Abhängigkeit von einer Position des Slave-Elektronikgeräts in dem seriellen Kommunikationsbus zuzuweisen, wobei: das Master-Elektronikgerät ausgebildet ist, ein Adress-Steuersignal an den seriellen Kommunikationsbus anzulegen; wobei das Slave-Elektronikgerät ausgebildet ist, in einen Adressierungsmodus ansprechend auf die Detektion des Adress-Steuersignals an dem seriellen Kommunikationsbus zu schalten; wobei das Master-Elektronikgerät ausgebildet ist, ein Adressierungssignal an den seriellen Kommunikationsbus anzulegen, wobei das Adressierungssignal die Kommunikationsadresse umfasst; und wobei das Slave-Elektronikgerät ausgebildet ist, ansprechend auf den Empfang des Adressierungssignals über den seriellen Kommunikationsbus die empfangene Kommunikationsadresse als die Kommunikationsadresse des Slave-Elektronikgeräts in dem seriellen Kommunikationsbus zu speichern.

Dadurch wird der technische Vorteil erreicht, dass das Master-Elektronikgerät automatisch eine effiziente und eindeutige Adresszuweisung für das Slave-Elektronikgerät und insbesondere eine Vielzahl weiterer Slave-Elektronikgeräte durchführen kann.

Vorstehend und nachstehend beschriebene Ausführungsformen des Verfahrens gemäß dem ersten Aspekt sind ebenfalls Ausführungsformen des selbstadressierbaren Kommunikationssystems gemäß dem zweiten Aspekt.

Vorstehend und nachstehend beschriebene Ausführungsformen des selbstadressierbaren Kommunikationssystems gemäß dem zweiten Aspekt sind ebenfalls Ausführungsformen des Verfahrens gemäß dem ersten Aspekt.

Weitere Ausführungsbeispiele werden Bezug nehmend auf die beiliegenden Zeichnungen näher erläutert. Es zeigen:
- Fig. 1: ein schematisches Diagramm eines Verfahrens zum Zuweisen einer Kommunikationsadresse zu einem Slave-Elektronikgerät gemäß einer Ausführungsform;
- Fig. 2a-d: schematische Darstellungen eines Master-Elektronikgeräts und eines Slave-Elektronikgeräts eines selbstadressierbaren Kommunikationssystems gemäß einer Ausführungsform; und
- Fig. 3: eine schematische Darstellung einer Steuerung eines selbstadressierbaren Kommunikationssystems gemäß einer Ausführungsform.

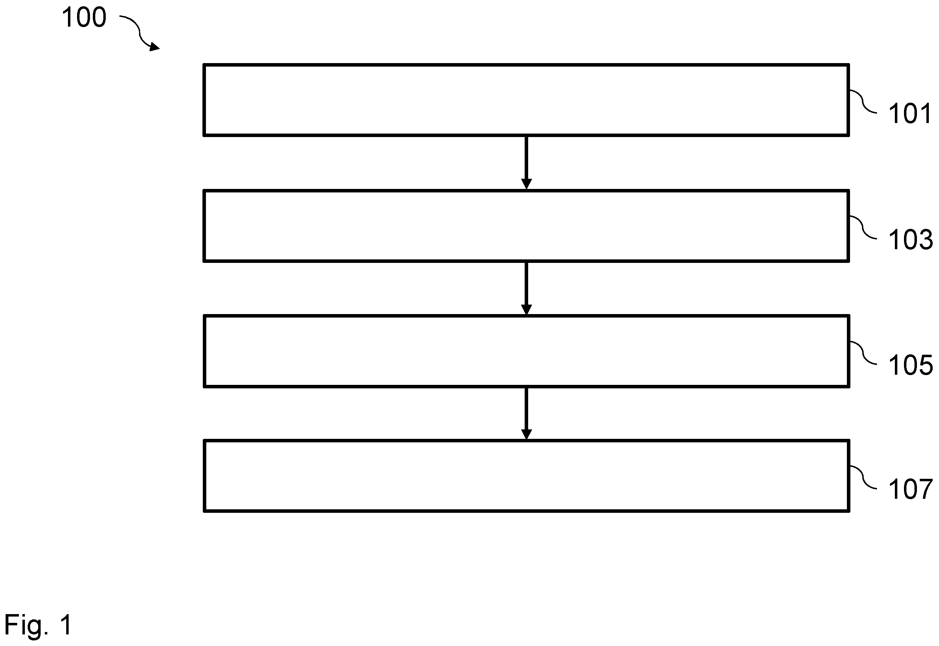

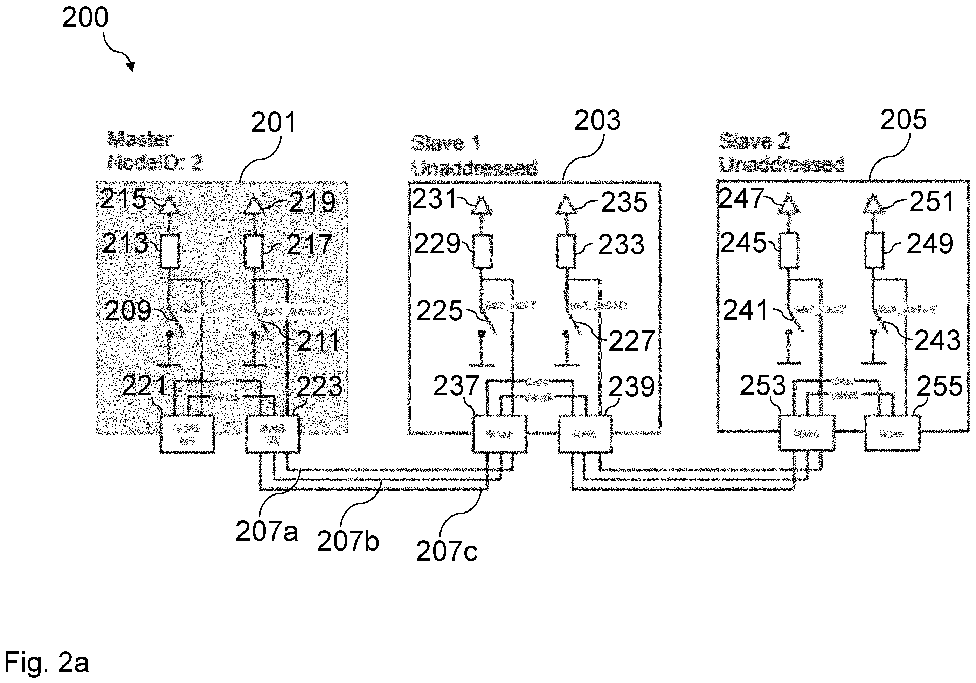

Fig. 1 zeigt ein schematisches Diagramm eines Verfahrens 100 gemäß einer Ausführungsform zum Zuweisen einer Kommunikationsadresse zu einem in der Fig. 1 nicht dargestellten Slave-Elektronikgerät 203. Das Slave-Elektronikgerät 203 ist in einen Adressierungsmodus schaltbar. Wie in den Fig. 2a-d gezeigt, ist das Slave-Elektronikgerät 203 einem seriellen Kommunikationsbus 207a-c seriell einem Master-Elektronikgerät 201 nachgeschaltet.

Wie zu den Fig. 2a-d näher beschrieben, wird die Kommunikationsadresse in Abhängigkeit von einer Position des Slave-Elektronikgeräts 203 in dem seriellen Kommunikationsbus 207a-c zugewiesen.

Wie in der Fig. 1 schematisch dargestellt, umfasst das Verfahren 100 ein Anlegen 101 eines Adress-Steuersignals an den seriellen Kommunikationsbus 207a-c durch das Master-Elektronikgerät 201.

Das Verfahren 100 umfasst ferner ein Schalten 103 des Slave-Elektronikgeräts 203 in den Adressierungsmodus ansprechend auf die Detektion des Adress-Steuersignals an dem seriellen Kommunikationsbus 207a-c.

Das Verfahren 100 umfasst ferner ein Anlegen 105 eines Adressierungssignals an den seriellen Kommunikationsbus 207a-c durch das Master-Elektronikgerät 201 ein, wobei das Adressierungssignal die Kommunikationsadresse umfasst.

Das Verfahren 100 umfasst ferner ein Speichern 107 der empfangenen Kommunikationsadresse als die Kommunikationsadresse des Slave-Elektronikgeräts 203 in dem seriellen Kommunikationsbus 207a-c durch das Slave-Elektronikgerät 203 ansprechend auf den Empfang des Adressierungssignals über den seriellen Kommunikationsbus 207a-c.

Fig. 2a-d zeigen schematische Darstellungen eines Master-Elektronikgeräts 201 und eines Slave-Elektronikgeräts 203 eines selbstadressierbaren Kommunikationssystems 200 gemäß einer Ausführungsform. Ferner ist ein weiteres Slave-Elektronikgerät 205 dargestellt. Das Master-Elektronikgerät 201 und das Slave-Elektronikgerät 203 und insbesondere das weitere Slave-Elektronikgerät 205 können Leistungselektronikmodule sein.

Das selbstadressierbare Kommunikationssystem 200 umfasst das Master-Elektronikgerät 201, das Slave-Elektronikgerät 203 und insbesondere das weitere Slave-Elektronikgerät 205. Das Slave-Elektronikgerät 203 kann dem Master-Elektronikgerät 201 bei einer Kommunikation über einen seriellen Kommunikationsbus 207a-c seriell nachgeschaltet sein. Das weitere Slave-Elektronikgerät 205 kann dem Slave-Elektronikgerät 203 bei einer Kommunikation über den seriellen Kommunikationsbus 207a-c seriell nachgeschaltet sein. Der serielle Kommunikationsbus 207a-c ein CAN-Kommunikationsbus oder ein I2C-Kommunikationsbus sein.

Der serielle Kommunikationsbus 207a-c kann über ein mehradriges Kabel realisiert sein. Das mehradrige Kabel kann einen ersten und zweiten Draht für ein Kommunikationssignal umfassen, insbesondere CAN-Kommunikationssignal. Das mehradrige Kabel kann einen dritten Draht für eine Masseverbindung umfassen. Das mehradrige Kabel kann einen vierten Draht für Adressierungssignale, Adress-Steuersignale und/oder Bestätigungssignale umfassen. Das mehradrige Kabel kann einen fünften Draht für eine Adressierung des Master-Elektronikgeräts 201 umfassen. Das mehradrige Kabel kann einen sechsten Draht für eine Stromversorgung des Master-Elektronikgeräts 201, des Slave-Elektronikgeräts 203 und insbesondere des weiteren Slave-Elektronikgeräts 205 umfassen. Über den sechsten Draht kann auch ein Notaussignal (auch als "Emergency Stop" bezeichnet) an das Master-Elektronikgerät 201, das Slave-Elektronikgerät 203 und insbesondere das weitere Slave-Elektronikgerät 205 zur Deaktivierung einer Leistung des entsprechenden Geräts 201, 203, 205 übermittelt werden.

Wie nachfolgend näher beschrieben, ist das selbstadressierbare Kommunikationssystem 200 ausgebildet, dem Slave-Elektronikgerät 203 und insbesondere dem weiteren Slave-Elektronikgerät 205 eine Kommunikationsadresse in Abhängigkeit von einer Position des Slave-Elektronikgeräts 203 in dem seriellen Kommunikationsbus 207a-c zuzuweisen.

Hierbei zeigt Fig. 2a einen ersten Zustand des selbstadressierbaren Kommunikationssystems 200, in dem lediglich dem Master-Elektronikgerät 201 eine Kommunikationsadresse zugewiesen ist, beispielsweise die Kommunikationsadresse 2.

Das Master-Elektronikgerät 201 kann einen ersten Schalter 209 umfassen, welcher mit einem ersten Kommunikationsanschluss 221 verbunden sein kann und zu einem in Reihe geschalteten ersten Detektionselement 213, insbesondere einem Messwiderstand, und einem ersten Steuerungsanschluss 215 des Master-Elektronikgeräts 201 parallelgeschaltet sein kann. Über den ersten Kommunikationsanschluss 221 kann dem Master-Elektronikgerät 201 die Adresse zugewiesen werden. Das Master-Elektronikgerät 201 kann ausgebildet sein, sich die Kommunikationsadresse zuzuweisen, wenn es an dem ersten Kommunikationsanschluss 221 eine Verbindung, beispielsweise verursacht durch einen Stecker, zwischen dem dritten Draht und dem fünften Draht erfasst.

Das Master-Elektronikgerät 201 kann einen zweiten Schalter 211 umfassen, welcher mit einem zweiten Kommunikationsanschluss 223 des Master-Elektronikgeräts 201 verbunden sein kann und zu einem in Reihe geschalteten zweiten Detektionselement 217, insbesondere einem Messwiderstand, und einem zweiten Steuerungsanschluss 219 des Master-Elektronikgeräts 201 parallelgeschaltet sein kann. Der zweite Kommunikationsanschluss 223 des Master-Elektronikgeräts 201 kann, wie in den Fig. 2a-d in einer beispielhaften Anschlusskonfiguration dargestellt, über den seriellen Kommunikationsbus 207a-c mit einem ersten Kommunikationsanschluss 237 des Slave-Elektronikgeräts 203 verbunden sein. Möglich ist aber auch, auch wenn dies in den Fig. 2a-d nicht dargestellt ist, dass irgendeiner der Kommunikationsanschlüsse 221, 223 des Master-Elektronikgeräts 201 über den seriellen Kommunikationsbus 207a-c mit irgendeinem der Kommunikationsanschlüsse 237, 239 des Slave-Elektronikgeräts 203 verbindbar ist. Sind die Slave-Elektronikgeräte 203, 205 nicht wie in den Fig. 2a-d dargestellt rechts des Master-Elektronikgeräts 201 angeordnet, sondern links des Master-Elektronikgeräts 201 angeordnet und/oder ist das Master-Elektronikgerät 201 über seinen ersten Kommunikationsanschluss 221 und den seriellen Kommunikationsbus 207a-c mit dem Slave-Elektronikgerät 203 verbunden, dann können die Funktionsweisen der Elemente 209, 213, 215, 221 mit den Elementen 211, 217, 219 und 223 entsprechend vertauscht sein.

Der erste Kommunikationsanschluss 221 des Master-Elektronikgeräts 201 kann ausgebildet sein, den ersten, zweiten, dritten und/oder sechsten Draht des mehradrigen Kabels mit dem zweiten Kommunikationsanschluss 223 des Master-Elektronikgeräts 201 zu verbinden. Der erste Steuerungsanschluss 215 des Master-Elektronikgeräts 201 und der zweite Steuerungsanschluss 219 des Master-Elektronikgeräts 201 können ausgebildet sein, über den vierten und/oder den fünften Draht des mehradrigen Kabels die Kommunikationsanschlüsse 221, 223 des Master-Elektronikgeräts 201 zu verbinden.

Das Slave-Elektronikgerät 203 kann einen ersten Schalter 225 umfassen, welcher mit dessen erstem Kommunikationsanschluss 237 verbunden sein kann und zu einem in Reihe geschalteten ersten Detektionselement 229 des Slave-Elektronikgeräts 203, insbesondere einem Messwiderstand, und einem ersten Steuerungsanschluss 231 des Slave-Elektronikgeräts 203 parallelgeschaltet sein kann.

Das Slave-Elektronikgerät 203 kann einen zweiten Schalter 227 umfassen, welcher mit einem zweiten Kommunikationsanschluss 239 des Slave-Elektronikgeräts 203 verbunden sein kann und zu einem in Reihe geschalteten zweiten Detektionselement 233 des Slave-Elektronikgeräts 203, insbesondere einem Messwiderstand, und einem zweiten Steuerungsanschluss 235 des Slave-Elektronikgeräts 203 parallelgeschaltet sein kann. Der zweite Kommunikationsanschluss 239 des Slave-Elektronikgeräts 203 kann, wie in den Fig. 2a-d in der beispielhaften Anschlusskonfiguration dargestellt, über den seriellen Kommunikationsbus 207a-c mit einem ersten Kommunikationsanschluss 253 eines weiteren Slave-Elektronikgeräts 205 verbunden sein. Möglich ist aber auch, auch wenn dies in den Fig. 2a-d nicht dargestellt ist, dass irgendeiner der Kommunikationsanschlüsse 237, 239 des Slave-Elektronikgeräts 203 über den seriellen Kommunikationsbus 207a-c mit irgendeinem der Kommunikationsanschlüsse 253, 255 des weiteren Slave-Elektronikgeräts 205 verbindbar ist. Sind die Slave-Elektronikgeräte 203, 205 nicht wie in den Fig. 2a-d dargestellt rechts des Master-Elektronikgeräts 201 angeordnet, sondern links des Master-Elektronikgeräts 201 angeordnet und/oder ist das Slave-Elektronikgerät 203 über seinen ersten Kommunikationsanschluss 237 und den seriellen Kommunikationsbus 207a-c mit dem weiteren Slave-Elektronikgerät 205 verbunden, dann können die Funktionsweisen der Elemente 225, 229, 231, 237 mit den Elementen 227, 233, 235 und 239 entsprechend vertauscht sein.

Der erste Kommunikationsanschluss 237 des Slave-Elektronikgeräts 203 kann ausgebildet sein, den ersten, zweiten, dritten und/oder sechsten Draht des mehradrigen Kabels mit dem zweiten Kommunikationsanschluss 239 des Slave-Elektronikgeräts 203 zu verbinden. Der erste Steuerungsanschluss 231 des Slave-Elektronikgeräts 203 und der zweite Steuerungsanschluss 235 des Slave-Elektronikgeräts 203 können ausgebildet sein, über den vierten und/oder den fünften Draht des mehradrigen Kabels die Kommunikationsanschlüsse 237, 239 des Slave-Elektronikgeräts 203 zu verbinden.

Das weitere Slave-Elektronikgerät 205 kann einen ersten Schalter 241 umfassen, welcher mit dessen ersten Kommunikationsanschluss 253 verbunden sein kann und zu einem in Reihe geschalteten ersten Detektionselement 245 des weiteren Slave-Elektronikgeräts 205, insbesondere einem Messwiderstand, und einem ersten Steuerungsanschluss 247 des weiteren Slave-Elektronikgeräts 205 parallelgeschaltet sein kann.

Das weitere Slave-Elektronikgerät 205 kann einen zweiten Schalter 243 umfassen, welcher mit einem zweiten Kommunikationsanschluss 255 des Slave-Elektronikgeräts 203 verbunden sein kann und zu einem zweiten Detektionselement 249 des weiteren Slave-Elektronikgeräts 205, insbesondere einem Messwiderstand, und einem zweiten Steuerungsanschluss 251 des weiteren Slave-Elektronikgeräts 205 parallelgeschaltet sein kann. Der zweite Kommunikationsanschluss 255 des weiteren Slave-Elektronikgeräts 205 kann, auch wenn dies in der Fig. 2a-d in der beispielhaften Anschlusskonfiguration nicht dargestellt ist, über den seriellen Kommunikationsbus 207a-c mit einem ersten Kommunikationsanschluss eines in der Fig. 2a nicht dargestellten nachfolgenden Slave-Elektronikgeräts verbunden sein. Möglich ist aber auch, auch wenn dies in den Fig. 2a-d nicht dargestellt ist, dass irgendeiner der Kommunikationsanschlüsse 253, 255 des weiteren Slave-Elektronikgeräts 205 über den seriellen Kommunikationsbus 207a-c mit irgendeinem der Kommunikationsanschlüsse des nachfolgenden Slave-Elektronikgeräts verbindbar ist. Alternativ kann, wie in den Fig. 2a-d dargestellt, das weitere Slave-Elektronikgerät 205 mit keinem weiteren Slave-Elektronikgerät verbunden sein. Sind die Slave-Elektronikgeräte 203, 205 nicht wie in den Fig. 2a-d dargestellt rechts des Master-Elektronikgeräts 201 angeordnet, sondern links des Master-Elektronikgeräts 201 angeordnet und/oder ist das weitere Slave-Elektronikgerät 205 über seinen ersten Kommunikationsanschluss 253 und den seriellen Kommunikationsbus 207a-c mit dem nachfolgenden Slave-Elektronikgerät verbunden, dann können die Funktionsweisen der Elemente 241, 245, 247, 253 mit den Elementen 243, 249, 251 und 255 entsprechend vertauscht sein.

Der erste Kommunikationsanschluss 253 des weiteren Slave-Elektronikgeräts 205 kann ausgebildet sein, den ersten, zweiten, dritten und/oder sechsten Draht des mehradrigen Kabels mit dem zweiten Kommunikationsanschluss 255 des weiteren Slave-Elektronikgeräts 205 zu verbinden. Der erste Steuerungsanschluss 247 des weiteren Slave-Elektronikgeräts 205 und der zweite Steuerungsanschluss 251 des weiteren Slave-Elektronikgeräts 205 können ausgebildet sein, über den vierten und/oder den fünften Draht des mehradrigen Kabels die Kommunikationsanschlüsse 253, 255 des weiteren Slave-Elektronikgeräts 205 zu verbinden.

Das Master-Elektronikgerät 201 ist ausgebildet, ein Adress-Steuersignal an den seriellen Kommunikationsbus 207a-c anzulegen. Hierzu kann das Master-Elektronikgerät 201 zum Anlegen des Adress-Steuersignals den zweiten Schalter 211 mit einem vorbestimmten Spannungspotential, insbesondere Massepotential, verbinden, um das vorbestimmte Spannungspotential an den seriellen Kommunikationsbus 207a-c anzulegen. Das Master-Elektronikgerät 201 kann nach dem Anlegen des Adress-Steuersignals an den seriellen Kommunikationsbus 207a-c den zweiten Schalter 211 von dem vorbestimmten Spannungspotential trennen, um eine Beaufschlagung des seriellen Kommunikationsbusses 207a-c mit dem vorbestimmten Spannungspotential zu unterbinden.

Das Slave-Elektronikgerät 203 ist ausgebildet, in einen Adressierungsmodus ansprechend auf die Detektion des Adress-Steuersignals an dem seriellen Kommunikationsbus 207a-c zu schalten. Hierzu kann das erste Detektionselement 229 des Slave-Elektronikgeräts 203 ausgebildet sein, das Adress-Steuersignal zu detektieren.

Das Master-Elektronikgerät 201 ist ausgebildet, ein Adressierungssignal an den seriellen Kommunikationsbus 207a-c anzulegen, wobei das Adressierungssignal die Kommunikationsadresse umfasst.

Das Slave-Elektronikgerät 203 ist ausgebildet, ansprechend auf den Empfang des Adressierungssignals über den seriellen Kommunikationsbus 207a-c die empfangene Kommunikationsadresse als die Kommunikationsadresse des Slave-Elektronikgeräts 203 in dem seriellen Kommunikationsbus 207a-c zu speichern.

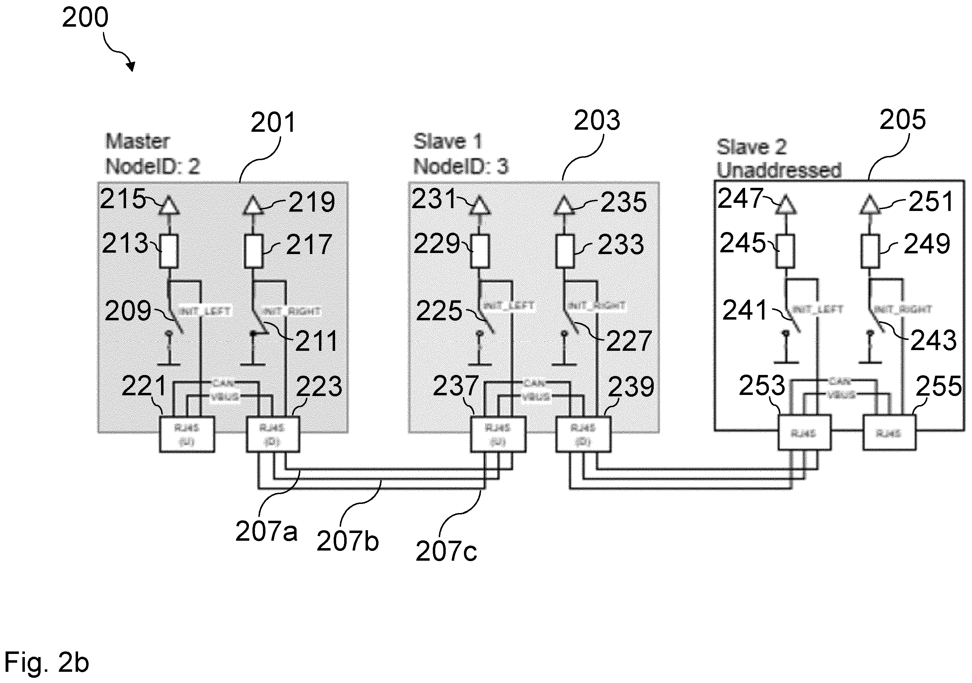

Fig. 2b zeigt einen zweiten Zustand des selbstadressierbaren Kommunikationssystems 200, in welchem dem Master-Elektronikgerät 201 und dem Slave-Elektronikgerät 203 eine Kommunikationsadresse zugewiesen ist. Dem Master-Elektronikgerät 201 kann beispielsweise die Kommunikationsadresse 2 und dem Slave-Elektronikgerät 203 kann beispielsweise die Kommunikationsadresse 3 zugewiesen sein.

Nach dem in Fig. 1 schematisch dargestellten Anlegen 105 des Adressierungssignals kann das Master-Elektronikgerät 201 ausgebildet sein, an den seriellen Kommunikationsbus 207a-c ein erneutes Anlegen des Adress-Steuersignals an den seriellen Kommunikationsbus 207a-c zu bewirken, um zu versuchen, ein weiteres Slave-Elektronikgerät, wie das weitere Slave-Elektronikgerät 205, zu adressieren.

Das Master-Elektronikgerät 201 kann hierzu ein Anweisungssignal über den seriellen Kommunikationsbus 207a-c an das Slave-Elektronikgerät 203 aussenden, wobei das Slave-Elektronikgerät 203 ansprechend auf den Empfang des Anweisungssignals das Adress-Steuersignal an den seriellen Kommunikationsbus 207a-c anlegt. Das Slave-Elektronikgerät 203 kann das Anweisungssignal über seinen ersten Kommunikationsanschluss 237 empfangen.

Das Slave-Elektronikgerät 203 kann ansprechend auf den Empfang des Anweisungssignals ein vorbestimmtes Spannungspotential, insbesondere mittels dessen zweiten Schalters 227 anlegen, wobei das vorbestimmte Spannungspotential das Adress-Steuersignal repräsentiert. Das Slave-Elektronikgerät 203 kann das Adress-Steuersignal an den seriellen Kommunikationsbus 207a-c über seinen zweiten Kommunikationsanschluss 239, insbesondere mittels seines mit einem vorbestimmten Spannungspotential, das das Adress-Steuersignal repräsentiert, verbindbaren zweiten Schalters 227 anlegen.

Das erneute Anlegen des Adress-Steuersignals an den seriellen Kommunikationsbus 207a-c durch das Master-Elektronikgerät 201 kann ansprechend auf den Empfang eines Adressbestätigungssignals bewirkt werden, das eine erfolgreiche Speicherung der Kommunikationsadresse durch das Slave-Elektronikgerät 203 anzeigt. Das Slave-Elektronikgerät 203 kann das Adressbestätigungssignal nach der Speicherung der Kommunikationsadresse an den seriellen Kommunikationsbus 207a-c anlegen.

Das weitere Slave-Elektronikgerät 205, das dem Slave-Elektronikgerät 203 in dem seriellen Kommunikationsbus 207a-c nachgeschaltet ist, kann ansprechend auf die Detektion des Adress-Steuersignals in einen Adressierungsmodus schalten.

Das Master-Elektronikgerät 201 kann ein weiteres Adressierungssignal mit einer weiteren Kommunikationsadresse an den seriellen Kommunikationsbus 207a-c anlegen. Das weitere Slave-Elektronikgerät 205 kann ansprechend auf den Empfang des weiteren Adressierungssignals über den seriellen Kommunikationsbus 207a-c die weitere Kommunikationsadresse als die Kommunikationsadresse des weiteren Slave-Elektronikgeräts 205 in dem seriellen Kommunikationsbus 207a-c speichern.

Nach der Speicherung der weiteren Kommunikationsadresse kann das weitere Slave-Elektronikgerät 205 ausgebildet sein, ein Adressbestätigungssignal an den seriellen Kommunikationsbus 207a-c anzulegen, insbesondere über dessen ersten Kommunikationsanschluss 253, um die erfolgreiche Vergabe der Kommunikationsadresse an das Master-Elektronikgerät 201 anzuzeigen.

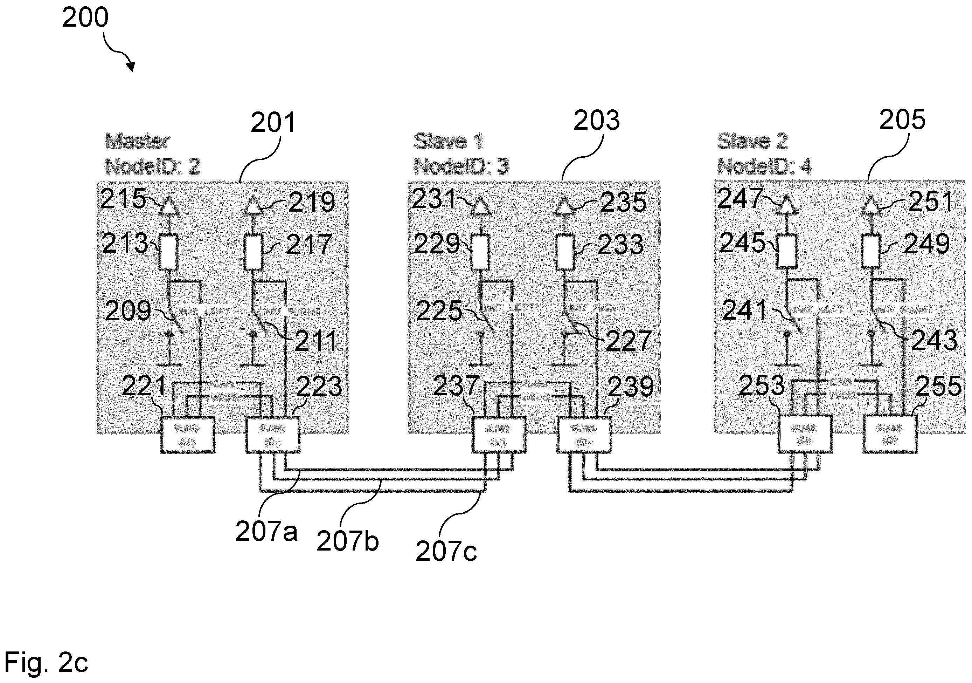

Fig. 2c zeigt einen dritten Zustand des selbstadressierbaren Kommunikationssystems 200, in welchem dem Master-Elektronikgerät 201, dem Slave-Elektronikgerät 203 und dem weiteren Slave-Elektronikgerät 205 eine Kommunikationsadresse zugewiesen ist. Dem Master-Elektronikgerät 201 kann beispielsweise die Kommunikationsadresse 2, dem Slave-Elektronikgerät 203 kann beispielsweise die Kommunikationsadresse 3 und dem weiteren Slave-Elektronikgerät 205 kann beispielsweise die Kommunikationsadresse 4 zugewiesen sein.

Nach dem Empfang des Adressbestätigungssignals von dem weiteren Slave-Elektronikgerät 205 kann das Master-Elektronikgerät 201 ausgebildet sein, an den seriellen Kommunikationsbus 207a-c ein weiteres erneutes Anlegen eines Adress-Steuersignals an den seriellen Kommunikationsbus 207a-c zu bewirken, um zu versuchen, ein weiteres Slave-Elektronikgerät zu adressieren. Das weitere Slave-Elektronikgerät 205 kann das Adressbestätigungssignal nach der Speicherung der Kommunikationsadresse an den seriellen Kommunikationsbus 207a-c anlegen.

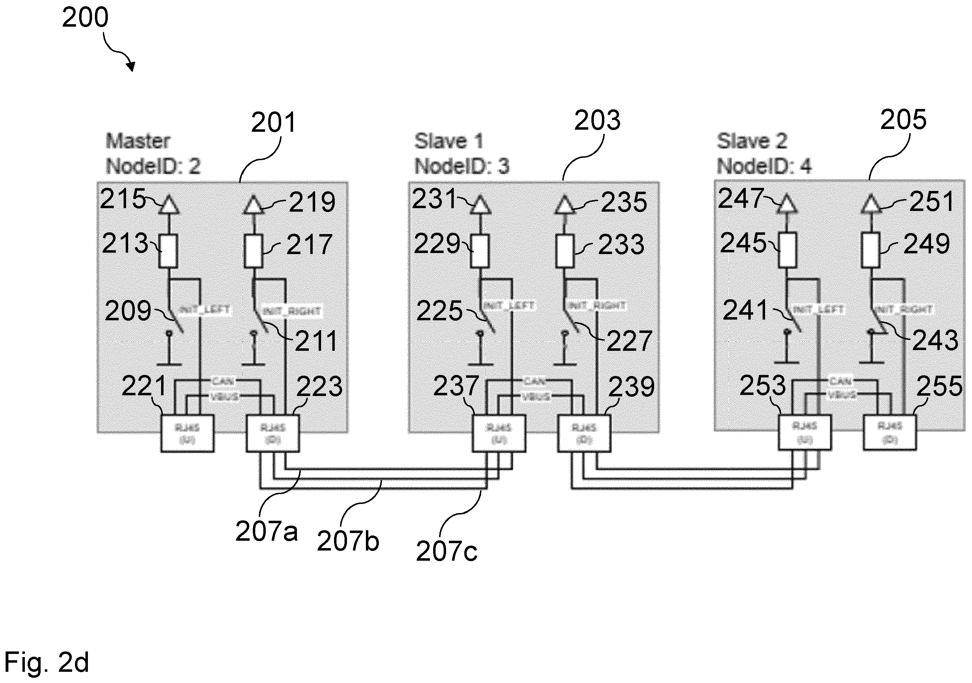

Analog zu dem Slave-Elektronikgerät 203 kann das weitere Slave-Elektronikgerät 205 ansprechend auf den Empfang eines weiteren Anweisungssignals von dem Master-Elektronikgerät 201 ausgebildet sein, ein vorbestimmtes Spannungspotential, insbesondere, wie in Fig. 2d schematisch dargestellt, mittels dessen zweiten Schalters 243 anlegen, wobei das vorbestimmte Spannungspotential das Adress-Steuersignal repräsentiert. Das weitere Slave-Elektronikgerät 205 kann das Adress-Steuersignal an den seriellen Kommunikationsbus 207a-c über seinen zweiten Kommunikationsanschluss 255, insbesondere mittels seines mit einem vorbestimmten Spannungspotential, das das Adress-Steuersignal repräsentiert, verbindbaren zweiten Schalters 243 anlegen.

Empfängt das Master-Elektronikgerät 201 innerhalb eines vorbestimmten Zeitintervalls kein weiteres Adressbestätigungssignal nach dem weiteren Anweisungssignal, dann kann das Master-Elektronikgerät 201 ausgebildet sein, die Adressvergabe zu beenden. Dabei kann das Master-Elektronikgerät 201 ausgebildet sein, das weitere Slave-Elektronikgerät 205 anzuweisen, seinen zweiten Schalter 243 wieder zu öffnen.

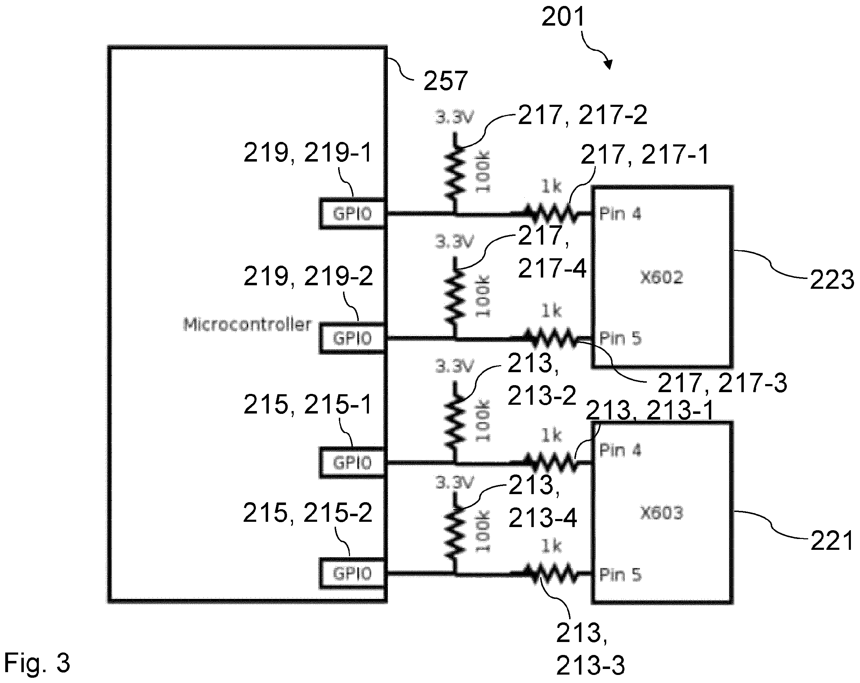

Fig. 3 zeigt eine schematische Darstellung einer Steuerung 257 eines selbstadressierbaren Kommunikationssystems 200 gemäß einer Ausführungsform. In der Fig. 3 ist beispielhaft die Steuerung 257 des in den Fig. 2a-d beschriebenen Master-Elektronikgeräts 201 gezeigt. Das Slave-Elektronikgerät 203 und das weitere Slave-Elektronikgerät 205 können entsprechend analog ausgebildete Steuerungen aufweisen.

Wie in der Fig. 3 schematisch gezeigt, kann die Steuerung 257 des Master-Elektronikgeräts 201 den ersten Kommunikationsanschluss 221 mit dem ersten Steuerungsanschluss 215 verbinden. Hierbei kann der erste Steuerungsanschluss 215 einen ersten Steckverbinder 215-1 für den vierten Draht und einen zweiten Steckverbinder 215-2 für den fünften Draht des mehradrigen Kabels umfassen.

Der erste Steckverbinder 215-1 kann über einen ersten Widerstand 213-1, insbesondere mit 1k Ohm, des ersten Detektionselements 213 mit dem ersten Kommunikationsanschluss 221 verbunden sein. Parallel zu dem ersten Widerstand 213-1 kann ein zweiter Widerstand 213-2 angeordnet sein, insbesondere mit 100k Ohm. Der zweite Widerstand 213-2 kann mit einer Spannungsquelle verbunden sein, insbesondere mit 3,3 V.

Der zweite Steckverbinder 215-2 kann über einen dritten Widerstand 213-3, insbesondere mit 1k Ohm, des ersten Detektionselements 213 mit dem ersten Kommunikationsanschluss 221 verbunden sein. Parallel zu dem dritten Widerstand 213-3 kann ein vierter Widerstand 213-4 angeordnet sein, insbesondere mit 100k Ohm. Der vierte Widerstand 213-4 kann mit der Spannungsquelle verbunden sein, insbesondere mit 3,3 V.

Ferner kann die Steuerung 257 des Master-Elektronikgeräts 201 den zweiten Kommunikationsanschluss 223 mit dem zweiten Steuerungsanschluss 219 verbinden. Hierbei kann der zweite Steuerungsanschluss 219 einen dritten Steckverbinder 219-1 für den vierten Draht und einen vierten Steckverbinder 219-2 für den fünften Draht des mehradrigen Kabels umfassen.

Der dritte Steckverbinder 219-1 kann über einen fünften Widerstand 217-1, insbesondere mit 1k Ohm, des zweiten Detektionselements 217 mit dem zweiten Kommunikationsanschluss 223 verbunden sein. Parallel zu dem fünften Widerstand 217-1 kann ein sechster Widerstand 217-2 angeordnet sein, insbesondere mit 100k Ohm. Der sechste Widerstand 217-2 kann mit der Spannungsquelle verbunden sein, insbesondere mit 3,3 V.

Der vierte Steckverbinder 219-2 kann über einen siebten Widerstand 217-3, insbesondere mit 1k Ohm, des zweiten Detektionselements 217 mit dem zweiten Kommunikationsanschluss 223 verbunden sein. Parallel zu dem siebten Widerstand 217-3 kann ein achter Widerstand 217-4 angeordnet sein, insbesondere mit 100k Ohm. Der achte Widerstand 217-4 kann mit der Spannungsquelle verbunden sein, insbesondere mit 3,3 V.

Die Steuerung 257 des Master-Elektronikgeräts 201 kann ausgebildet sein, die zu den Fig. 2a-d beschriebenen Anweisungssignale und/oder Adressierungssignale und/oder Adress-Steuersignale zu generieren sowie die in der Fig. 3 nicht gezeigten Schalter 209, 211 des Master-Elektronikgeräts 201 anzusteuern. Entsprechend können die Steuerungen der Slave-Elektronikgeräte 203, 205 ausgebildet sein, die Bestätigungssignale zu generieren und/oder auf Anweisung des Master-Elektronikgeräts 201 hin die Adress-Steuersignale sowie deren entsprechende Schalter 225, 227, 241, 243 anzusteuern, insbesondere auf Anweisungen des Master-Elektronikgeräts 201 hin.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt, müssen einzelne Elemente, die in Verbindung stehend dargestellt wurden, nicht direkt miteinander in Verbindung stehen; Zwischenelemente können zwischen den verbundenen Elementen vorgesehen sein. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Verfahren zum Zuweisen einer Kommunikationsadresse
- 101: Anlegen eines Adress-Steuersignals
- 103: Schalten des Slave-Elektronikgeräts in den Adressierungsmodus
- 105: Anlegen eines Adressierungssignals
- 107: Speichern der empfangenen Kommunikationsadresse
- 200: Selbstadressierbares Kommunikationssystem
- 201: Master-Elektronikgerät
- 203: Slave-Elektronikgerät
- 205: Weiteres Slave-Elektronikgerät
- 207a-c: Serieller Kommunikationsbus
- 209: Erster Schalter des Master-Elektronikgeräts
- 211: Zweiter Schalter des Master-Elektronikgeräts
- 213: Erstes Detektionselement des Master-Elektronikgeräts
- 213-1: Erster Widerstand
- 213-2: Zweiter Widerstand
- 213-3: Dritter Widerstand
- 213-4: Vierter Widerstand
- 215: Erster Steuerungsanschluss des Master-Elektronikgeräts
- 215-1: Erster Steckverbinder
- 215-2: Zweiter Steckverbinder
- 217: Zweites Detektionselement des Master-Elektronikgeräts
- 217-1: Fünfter Widerstand
- 217-2: Sechster Widerstand
- 217-3: Siebter Widerstand
- 217-4: Achter Widerstand
- 219: Zweiter Steuerungsanschluss des Master-Elektronikgeräts
- 219-1: Dritter Steckverbinder
- 219-2: Vierter Steckverbinder
- 221: Erster Kommunikationsanschluss des Master-Elektronikgeräts
- 223: Zweiter Kommunikationsanschluss des Master-Elektronikgeräts
- 225: Erster Schalter des Slave-Elektronikgeräts
- 227: Zweiter Schalter des Slave-Elektronikgeräts
- 229: Erstes Detektionselement des Slave-Elektronikgeräts
- 231: Erster Steuerungsanschluss des Slave-Elektronikgeräts
- 233: Zweites Detektionselement des Slave-Elektronikgeräts
- 235: Zweiter Steuerungsanschluss des Slave-Elektronikgeräts
- 237: Erster Kommunikationsanschluss des Slave-Elektronikgeräts
- 239: Zweiter Kommunikationsanschluss des Slave-Elektronikgeräts
- 241: Erster Schalter des weiteren Slave-Elektronikgeräts
- 243: Zweiter Schalter des weiteren Slave-Elektronikgeräts
- 245: Erstes Detektionselement des weiteren Slave-Elektronikgeräts
- 247: Erster Steuerungsanschluss des weiteren Slave-Elektronikgeräts
- 249: Zweites Detektionselement des weiteren Slave-Elektronikgeräts
- 251: Zweiter Steuerungsanschluss des weiteren Slave-Elektronikgeräts
- 253: Erster Kommunikationsanschluss des weiteren Slave-Elektronikgeräts
- 255: Zweiter Kommunikationsanschluss des weiteren Slave-Elektronikgeräts
- 257: Steuerung

## Patentansprüche

1. Verfahren (100) zum Zuweisen einer Kommunikationsadresse zu einem Slave-Elektronikgerät (203), welches in einem seriellen Kommunikationsbus (207a-c) seriell einem Master-Elektronikgerät (201) nachgeschaltet ist, wobei die Kommunikationsadresse in Abhängigkeit von einer Position des Slave-Elektronikgeräts (203) in dem seriellen Kommunikationsbus (207a-c) zugewiesen wird, wobei das Slave-Elektronikgerät (203) in einen Adressierungsmodus schaltbar ist, wobei das Verfahren (100) umfasst:
Anlegen (101) eines Adress-Steuersignals an den seriellen Kommunikationsbus (207a-c) durch das Master-Elektronikgerät (201);
Schalten (103) des Slave-Elektronikgeräts (203) in den Adressierungsmodus ansprechend auf die Detektion des Adress-Steuersignals an dem seriellen Kommunikationsbus (207a-c);
Anlegen (105) eines Adressierungssignals an den seriellen Kommunikationsbus (207a-c) durch das Master-Elektronikgerät (201) ein, wobei das Adressierungssignal die Kommunikationsadresse umfasst; und
Speichern (107) der empfangenen Kommunikationsadresse als die Kommunikationsadresse des Slave-Elektronikgeräts (203) in dem seriellen Kommunikationsbus (207a-c) durch das Slave-Elektronikgerät (203) ansprechend auf den Empfang des Adressierungssignals über den seriellen Kommunikationsbus (207a-c).

2. Verfahren (100) nach Anspruch 1, wobei das Master-Elektronikgerät (201) nach dem Anlegen (105) des Adressierungssignals an den seriellen Kommunikationsbus (207a-c) ein erneutes Anlegen des Adress-Steuersignals an den seriellen Kommunikationsbus (207a-c) bewirkt.

3. Verfahren (100) nach Anspruch 2, wobei das Master-Elektronikgerät (201) das erneute Anlegen des Adress-Steuersignals an den seriellen Kommunikationsbus (207a-c) ansprechend auf den Empfang eines Adressbestätigungssignals, das eine erfolgreiche Speicherung der Kommunikationsadresse durch das Slave-Elektronikgerät (203) anzeigt, bewirkt.

4. Verfahren (100) nach Anspruch 3, wobei das Slave-Elektronikgerät (203) das Adressbestätigungssignal nach der Speicherung der Kommunikationsadresse an den seriellen Kommunikationsbus (207a-c) anlegt.

5. Verfahren (100) nach Anspruch 2, wobei das Master-Elektronikgerät (201) ein Anweisungssignal über den seriellen Kommunikationsbus (207a-c) an das Slave-Elektronikgerät (203) aussendet, und wobei das Slave-Elektronikgerät (203) ansprechend auf den Empfang des Anweisungssignals das Adress-Steuersignal an den seriellen Kommunikationsbus (207a-c) anlegt.

6. Verfahren (100) nach Anspruch 5, wobei das Slave-Elektronikgerät (203) ansprechend auf den Empfang des Anweisungssignals ein vorbestimmtes Spannungspotential, insbesondere mittels eines Schalters (227), anlegt, wobei das vorbestimmte Spannungspotential das Adress-Steuersignal repräsentiert.

7. Verfahren (100) nach Anspruch 5 oder 6, wobei das Slave-Elektronikgerät (203) einen ersten Kommunikationsanschluss (237) und einen zweiten Kommunikationsanschluss (239) aufweist, wobei der erste Kommunikationsanschluss (237) mit einem Kommunikationsanschluss (223) des Master-Elektronikgerätes (201) verbunden ist, wobei das Anweisungssignal über den ersten Kommunikationsanschluss (237) empfangen wird, und wobei das Slave-Elektronikgerät (203) das Adress-Steuersignal an den seriellen Kommunikationsbus (207a-c) über den zweiten Kommunikationsanschluss (239), insbesondere mittels eines mit einem vorbestimmten Spannungspotential, das das Adress-Steuersignal repräsentiert, verbindbaren Schalters (227) anlegt.

8. Verfahren (100) nach einem der vorstehenden Ansprüche 2 bis 7, mit einem weiteren Slave-Elektronikgerät (205), das dem Slave-Elektronikgerät (203) in dem seriellen Kommunikationsbus (207a-c) nachgeschaltet ist, wobei das weitere Slave-Elektronikgerät (205) ansprechend auf die Detektion des Adress-Steuersignals in einen Adressierungsmodus schaltet.

9. Verfahren (100) nach einem der vorstehenden Ansprüche 2 bis 8, wobei das Master-Elektronikgerät (201) ein weiteres Adressierungssignal mit einer weiteren Kommunikationsadresse an den seriellen Kommunikationsbus (207a-c) anlegt, wobei das weitere Slave-Elektronikgerät (205) ansprechend auf den Empfang des weiteren Adressierungssignals über den seriellen Kommunikationsbus (207a-c) die weitere Kommunikationsadresse als die Kommunikationsadresse des weiteren Slave-Elektronikgeräts (205) in dem seriellen Kommunikationsbus (207a-c) speichert.

10. Verfahren (100) nach Anspruch 9, wobei das weitere Slave-Elektronikgerät (205) nach der Speicherung der weiteren Kommunikationsadresse ein Adressbestätigungssignal an den seriellen Kommunikationsbus (207a-c) anlegt, um die erfolgreiche Vergabe der Kommunikationsadresse an das Master-Elektronikgerät (201) anzuzeigen.

11. Verfahren (100) nach einem der vorstehenden Ansprüche, wobei Master-Elektronikgerät (201) einen Kommunikationsanschluss (223) aufweist, welcher mit dem seriellen Kommunikationsbus (207a-c) verbunden ist, wobei der Kommunikationsanschluss (223) einen Schalter (211) aufweist, und wobei das Master-Elektronikgerät (201) zum Anlegen des Adress-Steuersignals den Schalter (211) mit einem vorbestimmten Spannungspotential, insbesondere Massepotential, verbindet, um das vorbestimmte Spannungspotential an den seriellen Kommunikationsbus (207a-c) anzulegen.

12. Verfahren (100) nach Anspruch 11, wobei das Master-Elektronikgerät (201) nach dem Anlegen des Adress-Steuersignals an den seriellen Kommunikationsbus (207a-c) den Schalter (211) von dem vorbestimmten Spannungspotential trennt, um eine Beaufschlagung des seriellen Kommunikationsbusses (207a-c) mit dem vorbestimmten Spannungspotential zu unterbinden.

13. Verfahren (100) nach einem der vorstehenden Ansprüche, wobei das Master-Elektronikgerät (201) und das Slave-Elektronikgerät (203) Leistungselektronikmodule sind.

14. Verfahren (100) nach einem der vorstehenden Ansprüche, wobei der serielle Kommunikationsbus (207a-c) ein CAN-Kommunikationsbus [CAN: Controller Area Network] oder ein I2C-Kommunikationsbus ist.

15. Selbstadressierbares Kommunikationssystem (200) mit einem Master-Elektronikgerät (201) und einem Slave-Elektronikgerät (203), welches dem Master-Elektronikgerät (201) bei einer Kommunikation über einen seriellen Kommunikationsbus (207a-c) seriell nachgeschaltet ist, wobei das selbstadressierbare Kommunikationssystem (200) ausgebildet ist, dem Slave-Elektronikgerät (203) eine Kommunikationsadresse in Abhängigkeit von einer Position des Slave-Elektronikgeräts (203) in dem seriellen Kommunikationsbus (207a-c) zuzuweisen, wobei:
das Master-Elektronikgerät (201) ausgebildet ist, ein Adress-Steuersignal an den seriellen Kommunikationsbus (207a-c) anzulegen; wobei
das Slave-Elektronikgerät (203) ausgebildet ist, in einen Adressierungsmodus ansprechend auf die Detektion des Adress-Steuersignals an dem seriellen Kommunikationsbus (207a-c) zu schalten; wobei
das Master-Elektronikgerät (201) ausgebildet ist, ein Adressierungssignal an den seriellen Kommunikationsbus (207a-c) anzulegen, wobei das Adressierungssignal die Kommunikationsadresse umfasst; und wobei
das Slave-Elektronikgerät (203) ausgebildet ist, ansprechend auf den Empfang des Adressierungssignals über den seriellen Kommunikationsbus (207a-c) die empfangene Kommunikationsadresse als die Kommunikationsadresse des Slave-Elektronikgeräts (203) in dem seriellen Kommunikationsbus (207a-c) zu speichern.
